Europäisches Patentamt

European Patent Office

Office européen des brevets

(11) Publication number: **0 412 029 A1**

# EUROPEAN PATENT APPLICATION

(21) Application number: **90420365.0**

(22) Date of filing: **01.08.90**

(51) Int. Cl.5: **C08L 67/02**, C08K 3/30, C08J 5/18

(30) Priority: **03.08.89 US 388872**

(43) Date of publication of application:
**06.02.91 Bulletin 91/06**

(84) Designated Contracting States:
**GR**

(71) Applicant: **EASTMAN KODAK COMPANY**
**343 State Street**
**Rochester, New York 14650(US)**

(72) Inventor: **Sublett, Bobby Jones, c/o EASTMAN**
**KODAK COMPANY**
**Patent Department, 343 State Street**
**Rochester, New York 14650(US)**

(74) Representative: **Parent, Yves**
**Kodak-Pathé Département Brevets et**
**Licences Centre de Recherches et de**
**Technologie Zone Industrielle**
**F-71102 Chalon-sur-Saône Cédex(FR)**

(54) **Polyester compositions and articles produced therefrom.**

(57) Disclosed are amorphous, transparent, non-oriented polyesters and copolyesters containing barium sulfate particles for denesting characteristics. Also disclosed are sheet materials and articles made therefrom, as well as processes for making such polyesters and copolyesters

EP 0 412 029 A1

# POLYESTER COMPOSITIONS AND ARTICLES PRODUCED THEREFROM

Technical Field

The present invention relates to amorphous polyester compositions, processes for making polyesters, and transparent, denestable articles produced from such polyesters. The polyester compositions contain barium sulfate evenly distributed therein at a particular concentration and in particular size particles so as to provide sheet material and articles produced therefrom the proper coefficient of friction for certain handling characteristics, as well as preserving the transparent nature thereof.

Background of the Invention

Poly(ethylene terephthalate) [PET], poly(cyclohexanedimethanol ethylene terephthalate) [PCT], and copolymers thereof have properties such that they have become a major part of the packaging industry. These polymers are generally used in the semi-crystalline state and are opaque when used in nonoriented products. Oriented homopolyesters can be rendered transparent, but when used in the nonoriented state, such as in molding or thermoforming, they are opaque. There are many packaging applications for polyesters which require transparency. Manufacturers of transparent nonoriented packages generally use copolyesters which are inherently amorphous or amorphous homopolymers to produce trays, bottles, blister packages, and the like. The packages are normally stacked in bulk and require rapid unstacking when used with automatic filling or loading machinery. The amorphous (noncrystalline) articles have an inherent tendency to block or stick together which causes interruptions in the loading process. It is common for manufacturers of these amorphous polymers to use a lubricant or slip agent, i.e., a topical application to the formed articles to prevent them from nesting (sticking together) when stacked. The majority of these topically applied denesting agents, such as silicone lubricants, are objectionable to the end users.

There are numerous literature references describing antiblocking agents, slip agents, and denest agents for polymeric articles. There are also numerous literature references for the inclusion of inorganic salts, either added to film or sheet material from which the articles are made or which are included in the polymer reaction mixture to be dispersed uniformly throughout the polymer. The majority of the antiblock and slip agents are topically applied as powders or oils such as calcium carbonate or silicone lubricants. Slip agents included in the reaction mix are typically soluble inorganic salts of aliphatic acids or have the capability in the case of polyesters of forming carboxylic acid salts in situ which act as slip or antiblocking agents, usually for film or sheet for better unrolling characteristics.

Many inorganic pigments such as inert salts of barium, calcium, and magnesium are added to polymers in relatively high concentration (2-10 wt %) as fillers or pigments, or to enhance abrasion and wear resistance of the film or sheet. They are usually mixed with a plasticizer or organic compound to provide slip. They are normally very fine particles of <0.1 micron to provide a smooth rather than rough surface, such as disclosed in U.S. Patents 4,325,850 and 4,539,389.

A common denesting technique is to coat the articles with a silicone lubricant. British Patents 1,359,891 and 1,359,892 disclose a particular size inert calcium phosphate to form a roughened surface for oriented film. This particular calcium phosphate has a refractive index close to that of poly(ethylene terephthalate).

The present invention relates to the use of barium sulfate as a denesting media which also preserves the transparency of amorphous polyesters. Barium salts are disclosed in U.S. Patent 3,657,180 for preparing polyesters with good slip properties. However, these salts must be soluble in the polymer mix so as to form organic salts in situ which provide slip to the polyester. Barium salts are disclosed in U.S. Patent 4,325,850 to provide film with a low coefficient of friction and improved block, slip, and optical properties. However, it is used in conjunction with additional organic slip agents such as bisamide wax.

Barium sulfate is disclosed in Japanese Patents 60079931 and 87044774 as a media for obtaining good surface smoothness which provides slip to polyester film, but the loading is 1 wt % and the barium sulfate particle size is very fine (0.01 to 0.5 micron).

Japanese Patents 60082325 and 87044775 disclose barium sulfate in combination with titanium dioxide and silicon dioxide to produce polyester film with a smooth surface. Here again, it is used in high concentration (1 wt %) and requires a very fine particle size (0.01-0.5 micron) to provide abrasion resistance and good sliding activity for the film and are not transparent because of the titanium dioxide included.

U.S. Patent 4,798,759 relates to the use of certain particles, including barium sulfate, in polyester sheet material to produce surface roughness to adjust the slip behavior of the sheet. This patent, however, is concerned with oriented, crystalline polyester sheet and is not concerned with optical properties of amorphous sheet.

## Description of the Invention

According to the present invention, there is provided an amorphous, transparent, non-oriented polyester sheet having a thickness of 1-60 mils (0.025-1.5 mm) (preferably 2-30 mils or 0.05-0.75 mm) and a surface roughness sufficient to provide a coefficient of friction (COF) in a 3 mil thick sheet of less than 1.0, the sheet comprising (a) a polyester having repeat units from at least 50 mol % terephthalic acid and a glycol selected from ethylene glycol, 1,4-cyclohexane-dimethanol, and combinations thereof, and (b) 0.02-1.0 wt % barium sulfate having a particle size of 1-10 microns evenly dispersed in said polyester.

There is also provided a process for preparing an amorphous, transparent polyester sheet having a surface roughness sufficient to provide a coefficient of friction in a 3 mil thick sheet less than 1.0 comprising the steps of:

(a) preparing a polyester having repeat units from at least 50 mol % terephthalic acid and a glycol selected from ethylene glycol, 1,4-cyclohexanedimethanol and combinations thereof, in the presence of 0.02-1.0 wt % barium sulfate having a particle size of 1-10 microns, and

(b) extruding the polyester into a sheet of a thickness of 1-60 mils (0.025-1.5 mm).

Further, there is provided a polyester composition capable of being formed into a clear sheet having a surface roughness such that the coefficient of friction is less than 1.0 in a 3 mil thick sheet, the polyester having repeat units from at least 50 mol % terephthalic acid and a glycol selected from ethylene glycol, 1,4-cyclohexanedimethanol and combinations thereof, the composition further comprising 0.02-1.0% based on the weight of copolyester of barium sulfate having a particle size of 1-10 microns. It is believed that the transparency of sheets and articles made from the polyesters and copolyesters described herein is maintained because the refractive index of barium sulfate is close to that of the polyesters and copolyesters.

The term "polyester" as used herein is intended to include copolyesters.

The dicarboxylic acid component of the polyester may contain up to 50 mol % (based on total dicarboxylic acid content of 100 mol %) of repeat units from aromatic or alicyclic acids having 8 to 20 carbon atoms. Typical examples include cyclohexanedicarboxylic, phthalic, isophthalic, naphthalenedicarboxylic, etc.

The glycol component of the polyester consists essentially of ethylene glycol, 1,4-cyclohexanedimethanol, and any mixture of these glycols.

The polyesters are prepared using conventional esterification processes. Barium sulfate is added to the reaction mixture any time prior to polycondensation. Preferably, the barium sulfate is added to the reaction mix prior to esterification. It may conveniently be mixed with the glycol prior to entering the melt phase reactor.

In the polyester compositions according to this invention, it is essential that the barium sulfate be of a particle size of 1-10 microns. Also, it is necessary that the concentration of barium sulfate be within the range of 0.02-1.0 wt %. Too little barium sulfate does not give the proper coefficient of friction to articles made therefrom and too much results in a loss of transparency. The polyester is polymerized in the presence of the barium sulfate, using conventional techniques, to an I.V. of 0.4-1.0. The polyester composition is then extruded into a sheet of 1-30 mil (0.025-0.75 mm) in thickness using conventional thermoforming techniques. If desired, the sheet may then be thermoformed into the intended shape for use.

The barium sulfate having the particle size described herein is commercially available.

It will be found that articles produced from this polyester sheet are transparent and when stacked or nested together have the proper coefficient of friction to be easily denested. Articles for which the polyester sheet is especially suitable include trays and blister packages wherein the sheet is formed into a three dimensional shape, and then another flat sheet, such as paper of plastic is applied thereto to form an enclosed volume or pocket. Sometimes, especially in the case of blister packages, the flat sheet contains printed information, such as descriptive matter, instructions, etc. In such cases, it is essential that one be able to read the printing through the shaped polyester part. Typically, the distance between the flat sheet and shaped article (across the pocket) will be between 1/4 and 6 inches (0.64-15.2 cm). The polyester described herein is sufficiently transparent to allow one to read such printing.

One of the most important features of the present invention is the fact that articles nested or stacked together such that the surfaces thereof are in contact may be easily denested. In denesting, commonly by mechanical means, the surfaces must slide over each other. In the present invention, these surfaces are roughened by the evenly distributed barium sulfate particles to an extent sufficient to create the proper coefficient of friction of less than 1.0 when measured in a 3-mil sheet.

Surface roughness is determined by extruding 2 to 3 mil film and measuring dynamic coefficient of friction using ASTM Test Method No. D1894. Denest properties are determined from tests on formed articles, packaging blisters, trays or widemouth stackable tubs. Coefficient of friction is found to correlate well with denest properties. However, coefficient of friction is not an adequate test using thick sheet, film, or formed articles because the test requires good surface contact between two films. It has been found, however, the COF measured on thin film correlates well with denest properties. Coefficient of friction is measured on thin film 2-3 mil in thickness and low coefficient of friction indicates surface roughness. The measurement of low COF is then taken as an indicator of surface roughness.

The following examples are submitted for a better understanding of the invention.

Example 1

A 500-mL, round bottom flask equipped with a ground glass head, a stirrer shaft, nitrogen inlet, and a side arm is charged with 125 g of dimethyl terephthalate, 30 g of 1,4-cyclohexanedimethanol, 68 g of ethylene glycol, and a conventional catalyst system. The flask is then immersed in a Belmont metal bath and heated with stirring for 1 hr at 200°C and 1 hr at 210°C. After this time, the theoretical amount of methanol had been collected and 1.3 mL of a phosphorus compound is added to the reaction mixture. The bath temperature is increased to 280°C and the nitrogen inlet is clamped off and vacuum applied to reduce the pressure in the flask to 0.1 mm to 0.5 mm of mercury. The temperature is maintained at 280°C with stirring at the reduced pressure for 1 hr and 15 minutes. The metal bath is then lowered away from the flask, the vacuum outlet clamped off the nitrogen inlet opened, and the flask allowed to come to atmospheric pressure under a nitrogen blanket. The copolymer is allowed to cool to room temperature. The copolymer has an inherent viscosity of 0.76. All of the polyesters and copolyesters of this invention are prepared by the same general procedure as given in this example.

Example 2

All polyesters and copolyesters containing barium sulfate are prepared in the same general manner as in Example 1 except barium sulfate is added from an ethylene glycol suspension either to the initial reaction mix or after the transesterification step just prior to polycondensation.

Examples 3, 4, and 5

Examples 3, 4, and 5 shown in Table 1 show coefficient of friction measured on amorphous 2-3 mil film of poly(ethylene terephthalate) containing 0, 0.15, and 0.5 wt % barium sulfate. The control poly(ethylene terephthalate), Example 3, which contains no barium sulfate shows good transparency but has a high coefficient of friction. The >1 COF measurement indicates the film sticks together and will not slide in the test instrument. Both Examples 4 and 5 containing 0.15 and 0.5 wt % barium sulfate, respectively, show a much lower coefficient of friction indicating surface roughness and the film have good transparency showing little, if any, effect of as much as 0.5 wt % barium sulfate on the transparency of the film.

Examples 6, 7, 8, 9, and 10

Example 6, Table 1, is an amorphous 2-3 mil film of a poly(ethylene terephthalate) copolyester containing 3 mol % 1,4-cyclohexanedimethanol. This copolyester sticks together and will not slide in the test instrument indicating a very high COF. Examples 7, 8, 9, and 10 are the same copolyester composition as Example 6 except they contain 0.1, 0.25, 0.35, and 0.5 wt %, respectively, of barium sulfate. All four copolyesters have a reduced COF and have good transparency even when containing up to 0.5 wt % of barium sulfate.

Examples 11, 12, 13, 14, and 15

4

Example 11 is an amorphous 2-3 mil film of a copolyester of poly(ethylene terephthalate) containing 30 mol % of 1,4-cyclohexanedimethanol. This copolyester has a very high COF and is untestable. Examples 12, 13, 14, and 15 are the same copolyester compositions as in Example 11, except they contain 0.25, 0.35, 0.5, and 0.1 wt % barium sulfate, respectively. All four of these copolyesters have a reduced coefficient of friction (COF) and good film transparency.

Examples 16, 17, 18, 19, and 20

An amorphous copolyester, poly(ethylene terephthalate) containing 30 mol % 1,4-cyclohexanedimethanol is scaled up and four 75-pound batches containing 0, 0.1, 0.25, and 0.5 wt % barium sulfate are prepared. The copolyester batch containing no barium sulfate is extruded into 10- and 20-mil sheet, Examples 16 and 17. The sheet is used to form 6 in. x 4 in. x 1 1/2 in. trays. The formed trays are stacked 20 trays high, each enveloped and nested in the other. Denest properties are determined by individually removing the trays from the stack. The trays of Examples 16 and 17, Table 2, stick together and are very difficult to pull apart. This same copolyester composition in 2-3 mil film form had a coefficient of friction greater than 1. Examples 18 and 19, Table 2, are of trays 6 in. x 4 in. x 1 1/2 in. 20 mils in thickness containing 0.1 and 0.25 wt % barium sulfate, respectively. These trays are stacked in units of 20 and 50 and denest properties determined by estimating the ease of removing the trays one from the other. None of these trays stick together and the bottom trays fall freely away from the stack when the stack is picked up by grasping the first 3-5 trays at the top of the stack. In 2-3 mil film form, the copolyesters with barium sulfate have reduced COF of 0.40 to 0.45. Example 20 is the same composition as Examples 16 and 17 but contains 0.5 wt % barium sulfate and is in a tray form of 6 in. x 4 in. x 1 1/2 in. which is 10 mil thick. Denest tests show that these trays fall apart freely when the tray stack is picked up by grasping the first 3 to 5 trays at the top of the stack. In 2-3 mil film form this material has a low COF.

In the table which follows, the polyester in Examples 3-5 is PET; the polyester in Examples 6-10 is PET modified with 5 mol % 1,4-cyclohexanedimethanol; and the polyester in Examples 11-20 is PET modified with 30 mol % 1,4-cyclohexanedimethanol.

TABLE 1

| Coefficient of Friction of Polyester With and Without Barium Sulfate | | | | |
|---|---|---|---|---|
| Example Number | Barium Sulfate/Concentration % | Coefficient of Friction | Film Thickness (Mils) | Film Transparency |
| 3 | 0 | >1.0[1] | 2-3 | Transparent |
| 4 | 0.15 | 0.46 | 2-3 | Transparent |
| 5 | 0.50 | 0.42 | 2-3 | Transparent |
| 6 | 0 | >1.0 | 2-3 | Transparent |
| 7 | 0.10 | 0.45 | 2 | Transparent |
| 8 | 0.25 | 0.44 | 2-3 | Transparent |
| 9 | 0.35 | 0.43 | 2-3 | Transparent |
| 10 | 0.50 | 0.35 | 2-3 | Transparent |
| 11 | 0 | >1.0 | 2-3 | Transparent |
| 12 | 0.25 | 0.50 | 2-3 | Transparent |
| 13 | 0.35 | 0.45 | 2-3 | Transparent |
| 14 | 0.50 | 0.44 | 2-3 | Transparent |
| 15 | 0.10 | 0.43 | 2-3 | Transparent |

[1]Means samples stick and will not slide in test (no numbers obtained)

TABLE 2

| | Denest of Trays Formed From 10 to 20 Mil Sheet | | | | |
|---|---|---|---|---|---|
| Example Number | Barium Sulfate/Concentration % | Sheet Mils (mm) Thickness | Article | Transparency | Denest |
| 16 | 0 | 20 (0.5) | Tray | Excellent | Stick Together, Very Difficult to Pull Apart |
| 17 | 0 | 10 (0.25) | Tray | Excellent | Stick Together, Very Difficult to Pull Apart |
| 18 | 0.10 | 20 (0.5) | Tray | Excellent | Do Not Stick, Fall Apart Easily |
| 19 | 0.25 | 20 (0.5) | Tray | Excellent | Do Not Stick, Fall Apart Easily |
| 20 | 0.50 | 10 (0.25) | Tray | Excellent | Do Not Stick, Fall Apart Easily |

EP 0 412 029 A1

As used herein, the inherent viscosity (I.V.) is measured at 25°C using 0.50 g of polymer per 100 mL of a solvent consisting of 60% by weight phenol and 40% by weight tetrachloroethane.

Unless otherwise specified, all parts, percentages, ratios, etc., are by weight.

The invention has been described in detail with particular reference to preferred embodiments thereof, but it will be understood that variations and modifications can be effected within the spirit and scope of the invention.

**Claims**

1. An amorphous, transparent, non-oriented polyester sheet having a thickness of 1-30 mils (0.025-0.75 mm) and a surface roughness sufficient to provide a coefficient of friction in a 3 mil thick sheet of less than 1.0, said sheet characterized as comprising (a) a polyester having repeat units from at least 50 mol % terephthalic acid and from a glycol selected from ethylene glycol, 1,4-cyclohexanedimethanol, and combinations thereof, and (b) 0.02-1.0 wt % barium sulfate having a particle size of 1-10 microns evenly dispersed in said polyester.

2. A sheet according to Claim 1 wherein said polyester is poly(ethylene terephthalate).

3. A sheet according to Claim 1 wherein said polyester is a copolyester having repeat units from terephthalic acid, ethylene glycol and 1,4-cyclohexanedimethanol.

4. A sheet according to Claim 1 wherein said polyester is a copolyester having repeat units from at least 90 mol % terephthalic acid, 50-98 mol % ethylene glycol and 50-2 mol % 1,4-cyclohexanedimethanol.

5. A sheet according to Claim 1 wherein said barium sulfate has a particle size of 2-5 microns and is present in an amount of 0.05-0.5 wt %.

6. An article produced from the sheet of Claim 1.

7. A tray comprising the sheet of Claim 1.

8. A blister package comprising the sheet of Claim 1.

9. Process for preparing an amorphous, transparent polyester sheet having a surface roughness sufficient to provide a coefficient of friction in a 3 mil thick sheet less than 1.0 characterized as comprising the steps of:

   (a) preparing a polyester having repeat units from at least 50 mol % terephthalic acid and a glycol selected from ethylene glycol, 1,4-cyclohexanedimethanol and combinations thereof in the presence of 0.02-1.0 wt % barium sulfate having a particle size of 1-10 microns, and

   (b) extruding said copolyester into a sheet of a thickness of 1-60 mils (0.025-1.5 mm).

10. A process according to Claim 9 wherein said polyester is poly(ethylene terephthalate).

11. A process according to Claim 9 wherein said polyester is a copolyester having repeat units from terephthalic acid, ethylene glycol and 1,4-cyclohexanedimethanol.

12. A process according to Claim 9 wherein said polyester is a copolyester having repeat units from at least 90 mol % terephthalic acid, 50-98 mol % ethylene glycol and 50-2 mol % 1,4-cyclohexanedimethanol.

13. A process according to Claim 9 wherein said barium sulfate has a particle size of 2-5 microns and is present in an amount of 0.05-0.5 wt %.

14. An amorphous copolyester composition capable of being formed into a transparent sheet and having a surface roughness such that the coefficient of friction is less than 1.0 in a 3 mil thick sheet, said copolyester having repeat units from at least 50 mol % terephthalic acid and a glycol component consisting essentially of ethylene glycol and 1,4-cyclohexanedimethanol, said composition characterized as further comprising 0.02-1.0% based on the weight of copolyester of barium sulfate having a particle size of 1-10 microns.

15. A copolyester according to Claim 14 wherein said glycol component consists essentially of 50-98 % ethylene glycol and 50-2% 1,4-cyclohexanedimethanol.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 11, no. 282 (C-446)[2729], 11th September 1987; & JP-A-62 81 418 (KURARAY CO.) 14-04-1987 * Whole abstract * | 1-5,9-15 | C 08 L 67/02 C 08 K 3/30 C 08 J 5/18 |
| X | PATENT ABSTRACTS OF JAPAN, vol. 4, no. 34 (C-3)[516], 22nd March 1980; & JP-A-55 9606 (TORAY K.K.) 23-01-1980 * Whole abstract * | 1-5,9-15 | |
| A | PATENT ABSTRACTS OF JAPAN, vol. 12, no. 92 (C-483)[2939], 25th March 1988; & JP-A-62 225 542 (ASAHI CHEM. IND. CO.) 03-10-1987 * Whole abstract * | | |
| A | PATENT ABSTRACTS OF JAPAN, vol. 8, no. 283 (C-258)[1720], 25th December 1984; & JP-A-59 152 948 (TOYO BOSEKI K.K.) 31-08-1984 * Whole abstract * | | |
| A | FR-A-1 447 652 (EASTMAN KODAK CO.) * Abstract * | | |

TECHNICAL FIELDS SEARCHED (Int. Cl.5)

C 08 K
C 08 L
C 08 J

The present search report has been drawn up for all claims

| Place of search | Date of completion of search | Examiner |
|---|---|---|
| The Hague | 14 November 90 | DECOCKER L. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document